# FASCICULE DE BREVET EUROPEEN

(11) **EP 1 474 988 B1**
(45) Date de publication et mention de la délivrance du brevet: **08.08.2007**
(21) Numéro de dépôt: 04290352.6
(22) Date de dépôt: 11.02.2004
(51) Int. Cl.: A21C 15/04, B26D 7/01, B26F 1/38, B26D 7/18

(54) **Dispositif destiné à la séparation de la mie et de la croûte d'un pain**
Vorrichtung zum Trennen von Krume und Kruste eines Brotes
Apparatus for separating crumb and crust of a bread

(30) Priorité: 06.05.2003 FR 0305480
(43) Date de publication de la demande: 10.11.2004
(73) Titulaire: Carlier, François, 92310 Sevres (FR)
(72) Inventeur: Carlier, François, 92310 Sevres (FR)

(56) Documents cités:
- EP-A- 0 055 667
- FR-A- 2 536 960
- US-A- 4 843 716
- US-B1- 6 599 545

## Description

La présente invention concerne un dispositif pour séparer la mie et la croûte d'un pain pour consommer séparément la mie et la croûte.

Le dispositif selon l'invention est particulièrement destiné à la vente au détail de la mie et de la croûte du pain et est également destiné à la fabrication industrielle de sandwichs sans mie ou sans croûte. Il n'existe pas de dispositif assurant cette fonction et les consommateurs désireux de séparer la mie de la croûte d'un pain doivent le faire manuellement. La mie du pain est parfois retirée manuellement lors de la confection de sandwichs.

Le dispositif selon l'invention permet de remédier à ces inconvénients. Il comporte en effet selon une première caratéristique, un réceptacle mobile présentant une ouverture par laquelle peut être introduit un pain. L'ouverture comporte deux battants articulés par des charnières qui permettent de refermer le réceptacle après introduction d'un pain. Les battants sont maintenus en position fermée par deux crochets. Un réceptacle fixe comporte une extrémité ouverte, aux bords affûtés et encastrée dans le réceptacle mobile. L'utilisateur exerce une pression sur les poignées latérales solidaires du réceptacle mobile pour qu'il s'encastre totalement dans le réceptacle fixe de manière à faire pénétrer ce dernier à l'intérieur du pain et à en séparer la croûte de la mie. Le réceptacle fixe comporte une ouverture similaire à celle du réceptacle mobile comportant deux battants articulés par des charnières et maintenus en position fermée par deux crochets. Les battants et les crochets du réceptacle fixe ont des formes telles que lorqu'ils sont en position fermé ils ne sont pas saillants par rapport aux bords du réceptacle. Après séparation de la mie et de la croûte du pain, deux ressorts exercent une force antagoniste à celle exercée par l'utilisateur et replacent le réceptacle mobile dans sa position initiale. L'extrémité inférieure du réceptacle mobile est vide sur toute la surface couverte par l'extrémité supérieure du réceptacle fixe et pleine sur la surface couvrant la différence entre la largeur et la longueur du réceptacle fixe et la largeur et la longueur du réceptacle mobile. La largeur et la longueur du réceptacle mobile étant supérieures à la largeur et la longueur du réceptacle fixe la mie du pain se trouve placée dans le réceptacle fixe alors que la croûte du pain reste dans le réceptacle mobile. L'utilisateur peut donc extraire la mie d'une part et la croûte d'autre part de chaque réceptacle.

Selon les modes particuliers de réalisation :
- un seul ressort peut être prévu pour éloigner les deux réceptacles.
- un moteur peut être prévu pour abaisser le réceptacle mobile sur le réceptacle fixe.
- le réceptacle fixe peut être solidaire d'une base horizontale fixée à un mur pour assurer sa stabilité.
- le réceptacle fixe peut être solidaire d'une base verticale fixée au sol pour assurer sa stabilité.
- le réceptacle fixe peut être solidaire d'une base fixée à tout support assurant une stabilité suffisante au dispositif pour séparer la mie de la croûte d'un pain.
- les hauteurs respectives des battants permettant d'ouvrir les deux réceptacles peuvent être inférieures aux hauteurs respectives des réceptacles.
- les hauteurs respectives des battants permettant d'ouvrir les deux réceptacles peuvent être égales aux hauteurs respectives des réceptacles.
- les battants peuvent être maintenus en position fermée par des aimants.
- le réceptacle mobile peut être solidaire d'une cylindre encastré dans un autre cylindre solidaire du réceptacle fixe pour assurer au réceptacle mobile un mouvement rectiligne.
- le réceptacle mobile peut être solidaire de plusieurs cylindre encastrés dans d'autres cylindres solidaires du réceptacle fixe pour assurer au réceptacle mobile un mouvement rectiligne.
- le dispositif peut être incliné selon les contraintes spatiales du lieu où il se trouve.
- les formes et les dimensions des réceptacles peuvent varier selon les différents types de pains dont on veut séparer la mie de la croûte.

Les dessins annexés illustrent l'invention :

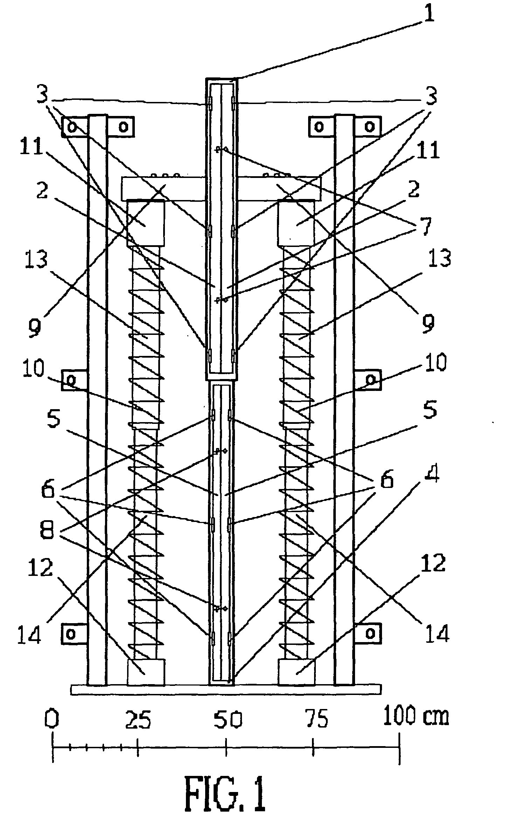

La figure 1 représente le dispositif de l'invention.
La figure 2 représente en coupe, les extrémités des deux cylindres qui restent encastrées l'une dans l'autre en position de repos.

En référence à ce dessin, le dispositif comporte un réceptacle mobile (1) présentant une ouverture composée de deux battants articulés (2) par des charnières (3) et dont une des extrémité est encastrée en position de repos dans un réceptacle fixe (4) comportant également une ouverture composée de deux battants articulés (5) par des charnières (6). Les battants sont maintenus en position fermée par des crochets (7) et (8). Les battants (5) et les crochets (8) du réceptacle fixe ont des formes telles que lorsqu'ils sont en postion fermée ils ne sont pas saillants par rapport aux bords du réceptacle. L'extrémité inférieure du réceptacle mobile et l'extrémité supérieure du réceptacle fixe sont fermées.

Le réceptacle mobile est solidaire de deux poignées (9) qui reposent sur deux ressorts (10). Les ressorts sont maintenus sur le même axe que les réceptacles par quatre cylindres (11), (12) de diamètres supérieurs aux diamètres des ressorts et quatre cylindres (13), (14) de diamètres inférieurs aux diamètres des ressorts. Les deux cylindres (14) ont des diamètres légèrement inférieurs aux diamètres des deux cylindres (13) dans lesquels ils sont encastrés.

A titre d'exemple non limitatif, le réceptacle mobile aura des dimensions de l'ordre de 9,6cm pour la longueur et la largeur et 88,8cm pour la hauteur et le réceptacle fixe aura des dimensions de l'ordre de 7,2cm pour la longueur et la largeur et 90cm pour la hauteur.

A titre d'exemple non limitatif, le dispositif peut être réalisé en acier ayant subi différents types de traitements thermiques selon les différentes fonctions de chaque composants à l'exception des poignées qui peuvent être réalisées en matière plastique moulée par injection.

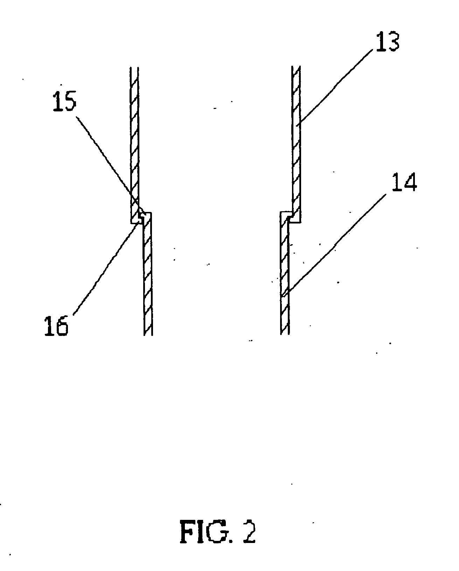

Selon les figure 2, dans les extrémités des deux cylindres (14) qui restent encastrées en position de repos dans les cylindres (13) solidaires du réceptacle mobile sont placés des rebords (15) contre lesquelles les parties fermées des extrémités (16) des cylindres (13) solidaires du réceptacle mobile viennent en butée sous l'action des ressorts en position de repos.

Selon une variante non illustrée, un seul ressort peut être prévu pour éloigner les deux réceptacles. Selon une variante non illustrée, un moteur peut être prévu pour abaisser le réceptacle mobile sur le récepracle fixe. Selon une variante non illustrée, le réceptacle fixe peut être solidaire d'une base verticale fixée au sol pour assurer sa stabilité. Selon une variante non illustrée, le réceptacle fixe peut être solidaire d'une base fixée à tout support assurant une stabilité suffisante au dispositif pour séparer la mie et la croûte d'un pain. Selon une variante non illustrée, les hauteurs respectives des battants permettant d'ouvrir les deux réceptacles peuvent être égales aux hauteurs respectives des réceptacles. Selon une variante non illustrée, les battants peuvent être maintenus en position fermée par des aimants. Selon une variante non illustrée, le réceptacle mobile peut être solidaire d'un cylindre encastré dans un autre cylindre solidaire du réceptacle fixe pour assurer au réceptacle mobile un mouvement rectiligne. Selon une variante non illustrée, le dispositif peut être incliné selon les contraintes spatiales du lieu où il se trouve. Selon une variante non illustrée, les formes et les dimensions des réceptacles peuvent varier selon les différents types de pains dont on veut séparer la mie de la croûte.

## Revendications

1. Dispositif pour séparer la mie de la croûte d'un pain **caracterisé en ce qu**'il comporte un réceptacle mobile (1) présentant une ouverture à deux battants (2) par laquelle est introduit le pain et un réceptacle fixe (4) encastré dans le premier, dont la section a une largeur et une longueur inférieures à celles du réceptacle mobile (1) et dont l'extrémité encastrée dans le réceptacle mobile (1) en position de repos est ouverte et affûtée pour permettre sa pénétration à l'intérieur du pain lorsque l'utilisateur exerce une pression sur des poignées (9) solidaires du réceptacle mobile (1).

2. Dispositif selon la revendication 1 **caractérisé en ce que** deux ressorts (10) tendent à éloigner le réceptacle mobile (1) du réceptacle fixe (4).

3. Dispositif selon la revendication 1 ou la revendication 2 **caractérisé en ce que** un moteur permet d'abaisser le réceptacle mobile (1) sur le réceptacle fixe (4).

4. Dispositif selon l'une quelconque des revendications précédentes **caractérisé en ce que** la base sur laquelle repose le réceptacle fixe (4) est solidaire d'un support qui permet d'encastrer les deux réceptacles (1) et (4) en décrivant un mouvement rectiligne.

5. Dispositif selon l'une quelconque des revendications précédentes **caractérisé en ce que** le réceptacle mobile (1) a la même forme que le pain dont l'utilisateur veut séparer la.mie de la croûte mais une largeur et une longueur supérieures.

6. Dispositif selon l'une quelconque des revendications précédentes **caractérisé en ce que** le réceptacle fixe (4) a une largeur et une longueur inférieures et une hauteur supérieure mais la même forme que le pain dont l'utilisateur veut séparer la mie de la croûte.

7. Dispositif selon l'une quelconque des revendications précédentes **caractérisé en ce que** les extrémités inférieures des cylindres mobiles (13) solidaires du réceptacle mobile (1) placés à l'intérieur des ressorts (10) qui sont encastrées en position de repos dans les cylindres fixes (14) solidaires du réceptacle fixe (4) sont pleines sur toute la surface couverte par la différence entre le diamètre des cylindres fixes (14) et leurs propres diamètres.

8. Dispositif selon l'une quelconque des revendications précédentes **caractérisé en ce que** les extrémités supérieures des cylindres fixes (14) solidaires du réceptacle fixe (4) placés à l'intérieur des ressorts (10) qui sont encastrés en position de repos dans les cylindres mobiles (13) solidaires du réceptacle mobile (1) comportent des rebords, contre lesquels les parties pleines des extrémités inférieures des cylindres mobiles (13) qui entourent les cylindres fixes (14) viennent en butée en position de repos sous l'action des ressorts (10).

## Claims

1. Device to separate the crumb from the crust of a loaf of bread in that it comprises a moving receptacle (1) comprising an opening with two door leaves (2) through which is introduced the loaf of bread and a fixed receptacle (4) fitted into the first, of which width and length are smaller than those of the moving receptacle (1) and which end fitted into the moving receptacle (1) in position of rest is open and sharpened to enable its penetration inside the loaf of bread when the user exerts a pressure on handles (9) integral with the moving receptacle (1).

2. Device in accordance with claim 1 **characterized in that** two springs (10) tend to move the moving receptacle (1) away from the fixed receptacle(4).

3. Device in accordance with claim 1 or claim 2 **characterized in that** an engine enables to pull down the moving receptacle (1) on the fixed receptacle(4).

4. Device in accordance with any previous claims **characterized in that** the base which the fixed receptacle (4) rests on is integral with a support which enables to fit the two receptacles (1) and (4) following a rectilinear movement.

5. Device in accordance with any previous claims **characterized in that** the moving receptacle (1) has the same shape as the loaf of bread of which the user wants to separate the crumb from the crust but a bigger width and a bigger length.

6. Device in accordance with any previous claims **characterized in that** the fixed receptacle (4) has a smaller width, a smaller length and a bigger height but the same shape as the a loaf of bread of which the user wants to separate the crumb from the crust.

7. Device in accordance with any previous claims **characterized in that** the moving cylinders' (13) lower ends integral with the moving receptacle (1) placed inside the springs (10) which are fitted, in position of rest, into the fixed cylinders (14) integral with the fixed receptacle (4) are solid on the whole of the surface covered by the difference between the diameter of the fixed cylinders (14) and their own diameters.

8. Device in accordance with any previous claims **characterized in that** the fixed cylinders' (14) upper ends integral with the fixed receptacle (4) placed inside the springs (10) which are fitted in position of rest into the moving cylinders (13) integral with the moving receptacle (1) are equipped with rims, against which the solid parts of the moving cylinders' (13) lower ends surrounding the fixed cylinders (14) abut in position of rest under the action of the springs (10).

## Patentansprüche

1. Vorrichtung für die Trennung eines Brotes von seiner Rinde, die einen beweglichen Behälter (1) beinhaltet, der eine Öffnung mit zwei Flügeln (2) aufweist, durch welche das Brot eingelegt wird sowie einen unbeweglichen (4), in ersteren eingebauten Behälter, dessen Breite und Länge geringer sind, als die des beweglichen Behälters (1) und dessen in den mobilen Behälter (1) eingebaute Ende in der Ruheposition geöffnet und geschliffen ist, um dessen Eindringen in das Innere des Brotes zu ermöglichen, wenn der Benutzer Druck auf die am mobilen Behälter (1) haftenden Griffe (9) ausübt.

2. Vorrichtung gemäß der Anforderung 1, die durch zwei Federn (10) charakterisiert ist, die dazu dienen, den unbeweglichen (4) vom beweglichen (1) Behälter fernzuhalten.

3. Vorrichtung gemäß der Anforderung 1 oder 2, die durch einen Motor charakterisiert ist, der es ermöglicht den beweglichen Behälter (1) auf den unbeweglichen Behälter (4) herabzusenken.

4. Vorrichtung gemäß jeglicher oben genannter Anforderung, die durch eine Basis charakterisiert ist, auf der der unbewegliche Behälter (4) haftet, und die mit einem Gestell verbunden ist, das es ermöglicht die beiden Behälter (1) und (4) durch eine geradlinige Bewegung ineinander zu fügen.

5. Vorrichtung gemäß jeglicher oben genannter Anforderung, die **dadurch** charakterisiert ist, dass der bewegliche Behälter (1) die gleiche Form hat wie das Brot, von dem der Benutzer die Rinde entfernen möchte, aber eine bedeutendere Breite und Länge.

6. Vorrichtung gemäß jeglicher oben genannter Anforderung, die **dadurch** charakterisiert ist, dass der unbewegliche Behälter (4) eine niedrigere Breite und Länge sowie eine bedeutendere Höhe, aber die gleiche Form hat wie das Brot, von dem der Benutzer die Rinde entfernen möchte.

7. Vorrichtung gemäß jeglicher oben genannter Anforderung, die **dadurch** charakterisiert ist, dass die unteren Enden der beweglichen Zylinder (13), die am beweglichen Behälter (1) haften und im Inneren der Federn (10) platziert sind, in Ruheposition in die fixen Zylinder (14) eingebettet sind, welche wiederum am unbeweglichen Behälter (4) haften, auf jener gesamten Fläche gefüllt sind, die die Differenz zwischen dem Durchmesser der fixen Zylinder (14) und deren eigenem Durchmesser ausmacht.

8. Vorrichtung gemäß jeglicher oben genannter Anforderung, die **dadurch** charakterisiert ist, dass die oberen Enden der fixen Zylinder (14), die am unbeweglichen Behälter (4) haften, und im Inneren der Federn (10) platziert sind, in Ruheposition in die mobilen Zylinder (13) eingebettet sind, die am beweglichen Behälter (1) haften, Kanten haben, gegen welche die gefüllten Teile der unteren Enden der beweglichen Zylinder (13), die die fixen Zylinder (14) umgeben, durch die Tätigkeit der Federn (10) zum Anschlag in Ruheposition kommen.
